## Europäisches Patentamt

## European Patent Office

## Office européen des brevets

(11) Publication number: **0 147 987**
**B1**

(12) **EUROPEAN PATENT SPECIFICATION**

(45) Date of publication of patent specification: 24.05.89

(21) Application number: 84308736.2

(22) Date of filing: 14.12.84

(51) Int. Cl.⁴: **F 25 B 9/00, F 25 B 11/00, B 64 D 13/08, F 04 D 25/16**

(54) Turbine-heat exchanger assembly.

(30) Priority: 16.12.83 US 562488
16.12.83 US 562490

(43) Date of publication of application:
10.07.85 Bulletin 85/28

(45) Publication of the grant of the patent:
24.05.89 Bulletin 89/21

(84) Designated Contracting States:
DE FR GB IT SE

(56) References cited:
EP-A-0 019 492
US-A-2 046 314
US-A-2 477 931
US-A-2 518 246
US-A-2 526 103
US-A-2 730 874
US-A-3 080 728
US-A-3 201 941
US-A-3 878 692
US-A-4 355 850
US-A-4 374 469

(73) Proprietor: THE GARRETT CORPORATION
9851-9951 Sepulveda Boulevard P.O. Box 92248
Los Angeles, California 90009 (US)

(72) Inventor: Wieland, K.H.
91 Dapplegray Lane
Rolling Hills Estates California (US)
Inventor: Spencer, D.M.
15911 Gault Street
Van Nuys California (US)
Inventor: Kinsell, R.C.
2100 Westridge Road
Los Angeles California (US)

(74) Representative: Roos, Michael John et al
KILBURN & STRODE 30 John Street
London WC1N 2DD (GB)

(56) References cited:
SOVIET INVENTIONS ILLUSTRATED, Week
Y44, 13th December 1977, page 2, 13th
December 1977, no. J9430, Y44, Derwent
Publications Ltd., Sections
General/Mechanical, London, GB; & SU - A -
553 411 (TURBINE COOLERS DES) 15-10-1975

Courier Press, Leamington Spa, England.

## Description

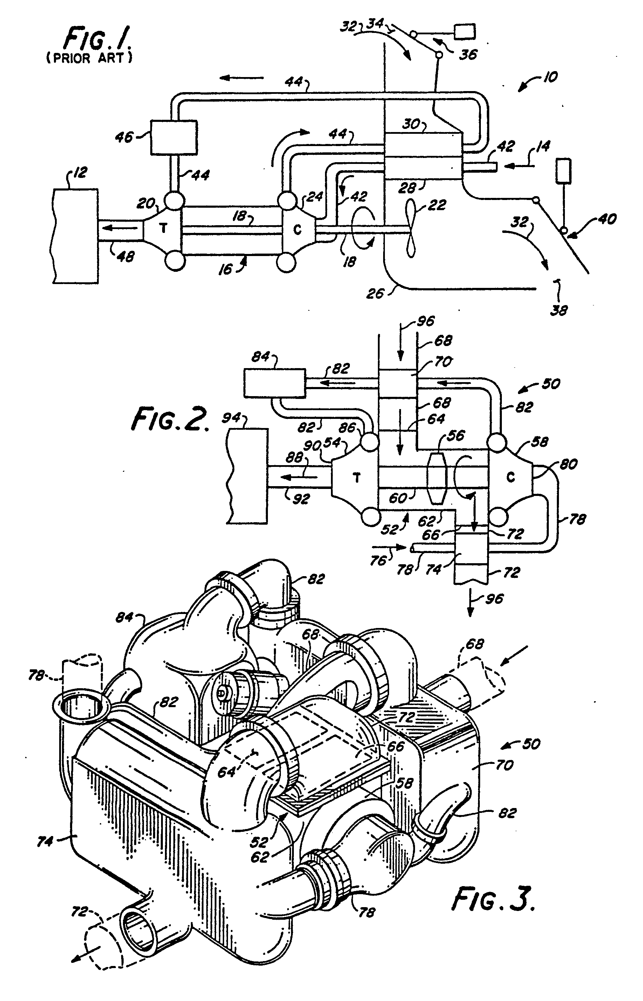

The present invention relates to an apparatus for providing cool environmental air for supply to a conditioned space such as an aircraft cabin. Such a prior art arrangement is shown in Figure 1 of the accompanying drawings.

Schematically illustrated in Figure 1 is a conventional air cycle cooling machine system 10 which is used to supply environmental control cooling air to an aircraft cabin 12, utilizing bleed air 14 from the aircraft's propulsion engine compressor. The system 10 includes an air cycle cooling machine 16 which includes a drive shaft 18, a turbine 20 secured to the left end of the shaft, a fan 22 mounted on the right end of the shaft, and a compressor 24 operably mounted on a central portion of the shaft, between the turbine 20 and the fan 22.

The fan 22 is mounted "outboard" (i.e. cantilevered on shaft 18) relative to the turbine 20 and compressor 24, and is positioned within a ram air duct 26, downstream from a pair of series-mounted heat exchangers 28, 30 positioned within the duct 26. Operation of the fan 22 draws ambient air 32 into an inlet opening 34 of the duct 26, which is controlled by conventional valve and damper means 36, across the heat exchangers 28, 30, and forces the air 32 out through a discharge opening 38 positioned at the opposite end of the duct 26, and controlled by conventional valve and damper means 40.

During operation of the cooling machine 16, the compressor 24 further compresses bleed air 14 entering via a supply duct 42 and derived from the aircraft's propulsion engine compressor. This air is partially cooled by the first heat exchanger 28, and is then discharged from the compressor 24 at a higher pressure and is forced, via a discharge duct 44, sequentially through the second heat exchanger 30 (where the air is further cooled), a conventional moisture removal system 46, and through the turbine 20. The bleed air which flows through the turbine 20 is expanded and further cooled, and leaves the turbine as environmental control cooling air which is supplied to the cabin 12 via a discharge duct 48. Such air rotationally drives the turbine 20 and, via the common driveshaft 18, the fan 22 and the compressor.

Several well-known problems and disadvantages are associated with the conventional air cycle cooling machine 16 of Figure 1. For example, because the temperature of the ram air leaving the heat exchanger 28 is commonly in excess of 232°C (450°F), it is necessary to isolate the bearings (typically of a conventional oil-lubricated type) which rotationally support the shaft 18 between the turbine and compressor from such high temperature. This requirement dictates that the bearings be positioned outside the ram air duct 26 and that the fan 22 be "outboard" mounted as illustrated, so that the balance of the cooling machine 16 can be positioned entirely outside the ram-air duct 26. As can be seen, this results in a rather awkward, space-consuming cooling system package which has a total width (the left-to-right dimension in Figure 1) equal to the width of the duct 26 plus nearly the entire length of cooling machine 16.

Additionally, because of the required cantilevered positioning of the fan 22 relative to the turbine 20 and compressor 24, several other design and operating problems arise. First, it is necessary to extend the shaft 18 through both the supply duct 42 (adjacent the compressor inlet) and a sidewall of the ram air duct 26, requiring that each shaft-duct juncture be carefully sealed to avoid leakage. Moreover, the shaft 18 must extend through the compressor 24, thereby unavoidably blocking a portion of its inlet opening.

The conventional cantilevered positioning of the fan 22 also imposes artificial design limitations on the turbine 20 and compressor 24. Specifically, to limit bending stress on the portion of the shaft 18 extending between the compressor and the fan, the rotational speed of the fan 22 must be kept below a critical—limit thereby limiting the rotational speed of both the turbine and compressor. This requires that the turbine and compressor be configured such that, at their flow rates, neither of their rotational speeds exceeds the critical fan speed. The result is that the efficiency of these elements (and thus the overall efficiency of the cooling machine) is markedly less than might otherwise be possible.

Finally, since the fan 22 is exposed to the high temperature ram air (usually at least 204°C (400°F)) leaving the heat exchanger 28 within the duct 26, it is normally required that it be constructed of a highly heat resistant material such as titanium. This, of course, increases the cost of the air cycle machine 16. Additionally, since titanium is a relatively heavy material, the rotational speed limit of the fan 22 (and thus the compressor and turbine as well) is further reduced.

Although generally reliable and fairly simple, the conventional air cycle cooling machine system just described thus has associated therewith several well-known disadvantages and heretofore unsolved problems. One such problem is that because the fan impeller is "outboard" mounted (i.e., cantilevered at one end of the drive shaft a considerable distance from the compressor and turbine and their housings near the other end of the shaft) its maximum permissible rotational speed dictates the design parameters of the turbine and compressor, thereby artificially limiting their efficiences.

More specifically, since there is a critical rotational speed above which the cantilevered fan cannot be operated, such critical speed also sets the maximum rotational speed of both the compressor and fan. Thus, for given bleed air flow rates through the compressor and turbine, the sizes and configurations of these elements must be designed so that their rotational speeds do not exceed the maximum permissible fan speed. This typically means that both the compressor and turbine must be operated with considerably less efficiency than would otherwise be possible.

Another problem, as has been mentioned, is that the fan must usually be of a special material, such as titanium, to withstand the high temperature (typically in excess of 232°C (450°F)) downstream from the dual heat exchangers, and to lessen the rotationally-induced bending stress on the shaft (thereby permitting a higher maximum fan speed). The necessity of using a titanium fan impeller, of course, markedly increases the cost of the air cycle machine.

Finally, as has been said, in conventional air cycle machines it is necessary to isolate their oil-fed bearings from the high temperature air exiting the ram air duct heat exchangers. As previously described, this requires that all of the air cycle machine except the fan and its cantilevered shaft portion be positioned outside of the ram air duct—an orientation which typically results in the air cycle machine projecting laterally a considerable distance from one side of the duct, thereby adding appreciably to the overall equipment space requirements.

Accordingly, it is an object of the present invention to provide an air cycle cooling machine which reduces or eliminates some or all the above-mentioned problems and disadvantages associated with conventional air cycle cooling apparatus.

Wood's U.S. Patent Specification No. 2,526,103 discloses apparatus for providing cool environmental air for supply to a conditioned space, such as an aircraft cabin, which comprises a compressor and a turbine mounted on a shaft and constituting an air cycle machine, first and second heat exchangers, each having first and second thermally communicating air flow paths of the two heat exchangers, and an environmental-air duct system for directing pressurised air from a source thereof, e.g. bleed air from an aircraft engine compressor, sequentially through the second flow path of the first heat exchanger, and the turbine, thereby to drive the turbine and simultaneously to operate the compressor, and to produce cool environmental air from an outlet of the turbine.

According to the present invention such apparatus is characterised in that the turbine and compressor have rotors mounted on either side of a fan on a common shaft for driving ambient air in turn through the first flow path of the first heat exchanger, the fan, and the first flow path of the second heat exchanger; and is characterised in that the two heat exchangers are positioned side-by-side, but spaced apart, and the air cycle machine is positioned in the space between the two heat exchangers in a compact assembly.

Such an arrangement enables a significant improvement in compactness of the overall geometry, and also enables a cooler running temperature of the fan, with the ability to utilise less expensive materials for the manufacture of the fan.

Morris U.S. Specification No. 2,518,246 does disclose a cabin cooling arrangement in which a fan is mounted between a compressor rotor and a turbine rotor on a common shaft. There is a single heat exchanger positioned physically between the fan and the turbine rotor in a far from compact arrangement.

The invention may be carried into practice in various ways, but one specific embodiment will now be described, by way of example, with reference to the accompanying drawings in which:—

Figure 1 (Prior Art) is a schematic diagram of a conventional air cycle cooling machine system;

Figure 2 is a schematic diagram of an air cycle cooling machine system which embodies principles of the present invention;

Figure 3 is a perspective view of the system of Figure 2;

Figure 4 is a greatly enlarged cross-sectional view through the cooling machine system schematically illustrated in Figure 2;

Figure 5 is a reduced scale, exploded perspective view of the cooling machine system of Figure 3.

Figure 6 is a diagrammatic cross section on the line 6—6 of Figure 4 showing a gas foil journal bearing; and

Figure 7 is a perspective view showing a gas foil thrust bearing.

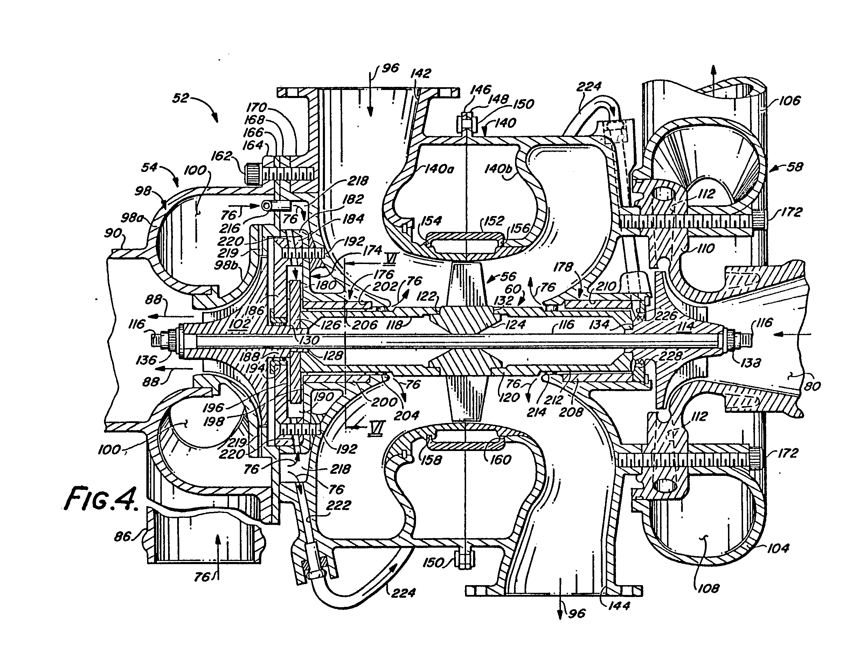

The present invention provides a greatly improved, compact air cycle cooling machine system 50 (Figs. 2 & 4) which eliminates or minimizes the above-mentioned and other problems. System 50 incorporates a uniquely constructed cooling machine 52 which, like its conventional counterpart 16, comprises a turbine 54, a fan 56, and a compressor 58—each secured to a common shaft system 60 for conjoint rotation therewith. As will be described in relation to Figure 4, the turbine, compressor, and fan are provided with their own housings 98, 104, and 140. It is so arranged that these housings can be clamped together with their inlet/outlet passages in varying circumferential positions (which, in fact, do differ as between the various Figures of the drawings). Further explanation of this feature will be made later.

Importantly, however, as shown in Figure 2, the fan 56 is positioned between the turbine 54 and the compressor 58 which are respectively secured to the opposite ends of the shaft system 60. Circumscribing the fan 56 and extending between the turbine 54 and the compressor 58 is a fan housing 62 having an inlet 64 and an outlet 66, each positioned between the fan and turbine. Secured to the inlet 64 is a first, inlet, portion 68 of a ram air duct having positioned therein a first heat exchanger 70. A second, outlet, portion 72 of the ram air duct is secured to the housing outlet 66 and has positioned therein a second heat exchanger 74.

During operation of the system 50, hot bleed air 76 from the aircraft's engine compressor is forced, via a supply duct 78, through the second heat exchanger 74 and into the inlet 80 of the compressor 58. The compressed bleed air discharged from the compressor 58 then flows, via discharge ductwork 82, sequentially through the first heat exchanger 70, a conventional moisture removal system 84, and into the inlet 86 of the turbine 54. Expanded, cooled air 88 leaving the turbine outlet 90 is supplied, via a discharge duct 92, as environmental control air to an aircraft cabin 94 or other air conditioned space. Additionally, passage of the bleed air through the turbine, rotationally drives the three components of the air cycle machine 52 i.e. the turbine 54, fan 56 and compressor 58. Rotation of the fan 56 draws ambient air 96 into the inlet ram air duct portion 68, sequentially across the first heat exchanger 70, through the fan housing 62 and across the second heat exchanger 74, and then forces the ambient air outwardly through the outlet ram air duct portion 72, thereby pre-cooling the bleed air flowing through the ducts 78 and 82.

The central positioning of the fan 56 facilitates an extremely compact packaging arrangement of the system 50 illustrated in perspective in Figure 3. In such an arrangement, both the air cycle machine 52, and the moisture removal system 84 are physically positioned between the heat exchangers 70, 74, with the machine 52 extending longitudinally parallel to the lengths of the heat exchangers, and the moisture removal system 84 being positioned adjacent the turbine end of the cooling machine. Positioned in this fashion, the air cycle machine does not project outwardly of the heat exchangers, thereby greatly reducing the overall size of system 50 relative to the size the conventional system 10 of Figure 1.

It should also be noted that, in the system arrangement depicted in Figures 2 and 3, the fan 56 is positioned in the air flow between the two exchangers 70, 74 instead of being positioned downstream of both heat exchangers, as in the conventional system of Figure 1. Unlike the conventional fan position in Figure 1, this novel arrangement protects the fan 56 from debris in the ram air duct (either upstream or downstream from the fan) by using the heat exchangers 70, 74 as upstream and downstream debris barriers, respectively.

Not only is the fan 56 essentially completely protected and isolated from potentially harmful debris, but it need withstand only approximately half the temperature that its conventional counterpart must withstand. This is due to the fact that the fan 56 is downstream of only the heat exchanger 70. Accordingly, of the total heat added to the ambient air 96 by such heat exchangers, approximately half is added after the air has left the fan housing 62. Because of this feature, the fan 56 is able to be constructed of aluminium rather than the heavier and costlier titanium required for the fan 22 of Figure 1.

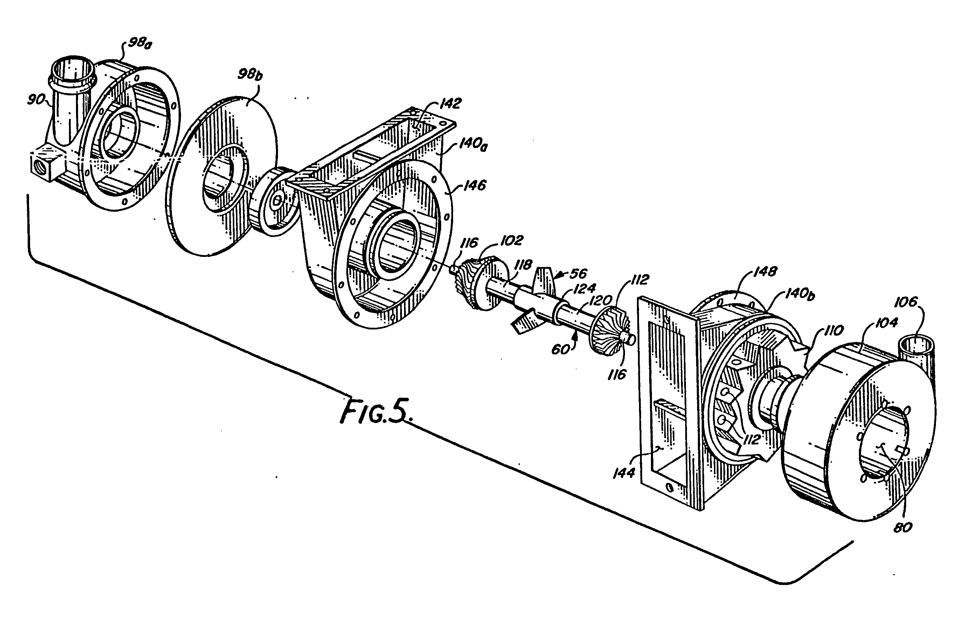

Referring to Figures 4 and 5, the construction and operation of the improved air cycle cooling machine 52 will now be described in greater detail. The turbine 54 includes a hollow, generally cylindrical housing 98 into which the turbine inlet 86 (Figure 4) enters generally tangentially, and from which the turbine outlet 90 (Figure 5) centrally extends in an axial direction. The turbine housing 98 comprises axially outer and inner portions 98a, 98b and has defined therein a generally annular inlet passage 100, which circumscribes a bladed turbine wheel 102, and communicates with the turbine inlet 86. The compressor 58 comprises a hollow, generally cylindrical housing 104 into which the inlet 80 axially enters, and from which an outlet 106 generally tangentially extends. The compressor housing 104 has defined therein an annular discharge passage 108 which circumscribes an annular diffuser section 110 having formed therein an annular array of generally radially extending diffuser passages 112. These passages 112 extend between the inlet and discharge passages 80, 108 and circumscribe the discharge end of a bladed compressor impeller 114.

The shaft system 60, which extends between the mutually spaced turbine wheel 102 and compressor impeller 114, includes a main or inner shaft 116 which extends, along a central portion thereof, through the fan impeller 56. At its left end, the shaft 116 is extended through the turbine wheel 102, and at its right end is extended through the compressor impeller 114. The shaft system also include a first hollow outer shaft portion 118, to the left of the fan 56, and a second hollow outer shaft portion 120, to the right of the fan 56. The shaft portion 118 coaxially circumscribes the inner shaft 116 and extends from an annular shoulder 122 formed on a central hub 124 of the fan 56 leftwardly to a radially inner portion of an annular thrust bearing runner plate 126 (having a function to be subsequently described). The runner plate 126, as well as a left end portion of the outer shaft portion 118, has extended therethrough an axially inner end portion 128 of the turbine wheel 102. The runner plate 126 bears against an annular shoulder 130 formed on the impeller 102. At the right hand side of the fan 56, the second outer shaft portion 120 similarly extends between an annular shoulder 132 on the fan hub 124 and an annular shoulder 134 on the compressor impeller 114.

The turbine wheel 102, the bearing runner plate 126, the outer shaft portions 118, 120, the fan hub 124 and the compressor impeller 114 are frictionally locked together for conjoint rotation by means of a pair of tightening nuts 136, 138 which engage the outer threaded ends of the inner shaft 116 and respectively bear against the outer ends of the turbine wheel 102 and the compressor impeller 114. As these nuts are tightened, the turbine wheel 102 and the compressor impeller 114 are forced inwardly along shaft 116, in turn forcing the outer shaft portions 118, 120 into frictional engagement with the fan hub 124. In this manner, the shaft system 60 is frictionally locked to the turbine, fan, and compressor elements of the air cycle machine 52.

Extending completely between the turbine housing 98 and the compressor housing 104, and circumscribing the fan 56, is a hollow fan housing 140 which is axially divided into two separate, generally cylindrical sections 140a, 140b. The left-hand section 140a has an inlet 142 on one side of the fan 56, and the right-hand section 140b has an outlet 144 on the other side of the fan. The two housing sections are joined at their juncture by means of a pair of abutting annular flanges 146, 148 thereon through which extend an annular array of bolts 150 or other suitable fasteners. Circumscribing a radially inner portion of the abutting housing sections 140a, 140b and the fan 156, is a burst containment ring 152 having a generally U-shaped cross-section with inturned lips 154, 156. To restrain the ring 152 against axial movement, the lip 154 is received in an annular channel 158 formed in the left-hand housing section 140a, and the other lip 156 bears against an annular shoulder 160 formed in the right-hand section 140b.

The left-hand fan housing section 140a is secured to the turbine housing 98 by an annular array of bolts 162 (only one of which is shown in Fig. 4) which extends successively through annular flanges 164, 166 on the turbine housing 98, and annular flanges 168, 170 on the fan housing section 140a. At the opposite end of the air cycle machine 52, the compressor housing 104 is similarly secured to the fan housing section 140b by an annular array of bolts 172 which extend successively through the compressor housing 104, the diffuser 110 and into the fan housing 140b.

The assembly of the turbine housing, fan housing and compressor housing described above ensures that the three units, and also the two halves of the fan housing, abut in radial planes, and by means of abutting annular flanges in each case. Thus the abutment between the turbine housing 98 and the left-hand fan housing section 140a occurs at the joining plane between the flanges 166 and 168.

Similarly the abutment of the two fan housing sections 140a and 140b occurs at the joining plane of their respective flanges 146 and 148. Furthermore, the right-hand fan housing section 140b and the compressor housing 104 also abut in a radial plane 105.

This arrangement and joining method very advantageously permits the turbine inlet 86, the fan inlet 142, the fan outlet 144 and the compressor outlet 106 to be "clocked" (i.e., rotationally oriented) relative to each other in a wide variety of ways thereby affording great installation flexibility to the cooling machine 52. More specifically, as can be seen by comparing Figures 3, 4 and 5, since the turbine and compressor housings 98 and 104 respectively can be variably rotationally oriented relative to their adjacent fan housing sections 140a, 140b, and sections 140a, 140b can be similarly adjusted with respect to one another the aforementioned inlets and outlets can be independently positioned to provide convenient connection points for an equally wide variety of bleed air duct and ram air duct orientations. Figures 3, 4 and 5 each depict a different one of many possible combinations of inlet-outlet relative positioning made possible by this facet of the present invention.

At this point another distinct advantage of the unique construction of the air cycle machine 52 should be noted. Unlike the conventional construction of the cooling machine 16 of Figure 1, the shaft system 60 of the machine 52 does not extend entirely through the compressor inlet 80 (or, for that matter, the turbine outlet 90). Thus, the shaft system in no way impedes the flow of air into the compressor 114 or out of the turbine. Neither does the shaft system have to be extended through any compressor inlet ductwork as in the conventional configuration of Figure I.

Additionally, it should be noted that the maximum diameter of the shaft system 60 (i.e. the outer diameter of the two shaft sections 118, 120) is essentially as large as the discharge diameter of the turbine wheel 102, or the inlet diameter of the compressor impeller 114. It is, of course, these large diameter shaft sections which support the fan 56 both at a central and radial outer position of its hub 124. This larger diameter shaft support of the fan could not be accomplished in the conventional Figure 1 configuration because the portion of its shaft 18 extending between the compressor 24 and the fan 22 must, of necessity, be smaller in diameter than the compressor impeller inlet diameter.

Facilitating the advantageous central positioning of the fan 56 is the use in the present invention of a unique gas foil bearing system which supports the shaft system 60 and is continuously lubricated by a portion of the bleed air 76 used rotationally to drive the turbine 102, the fan 56 and the compressor 114. Referring now to Figures 4, 6 and 7, the bearing system comprises a gas foil thrust bearing 174 positioned between the turbine wheel 102 and the left end of the outer shaft section 118, a gas foil journal bearing 176 positioned at the left end of the outer shaft section 118, and a gas foil journal bearing 178 positioned at the right hand end of the outer shaft section 120. The gas foil bearings 174, 176 and 178 are each generally similar in construction to those illustrated and described in U.S. Patent 3,615,121 assigned to the present Applicant. However, in the present invention, such bearings are positioned and continuously lubricated in a novel manner which will now be described. The bearings are the subject of European Patent 0 150 599.

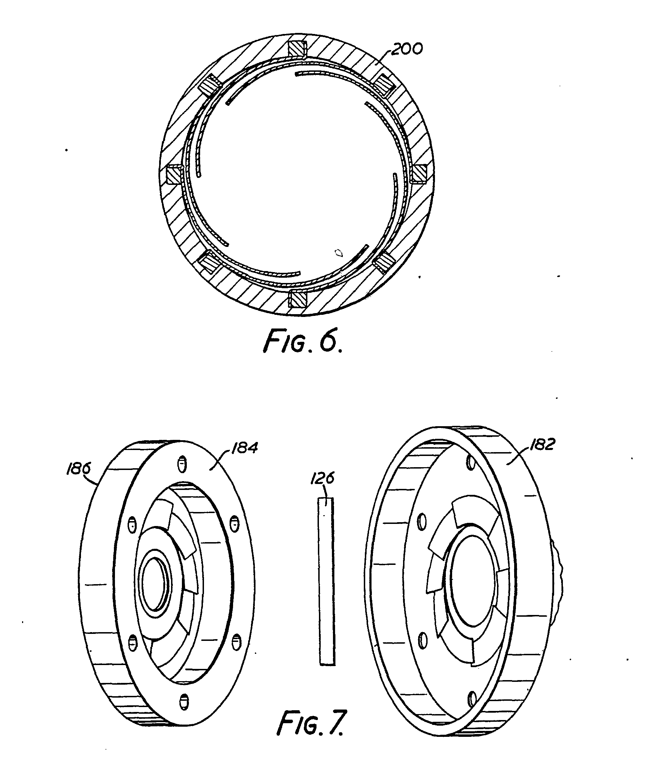

An example of a suitable form of the thrust foil bearing 174 is shown in Figure 7. It comprises a stationary annular, inner, thrust plate 180 which is defined by a radially inner left end portion of the fan housing section 140a and circumscribes the left end of the outer shaft section 118. The thrust plate 180 has a leftwardly extending annular peripheral lip 182 which overlies a rightwardly extending annular lip 184 on a second, stationary, annular outer thrust plate 186 that circumscribes a narrow neck portion 188 of the turbine wheel immediately to the left of the shoulder 130. The outer thrust plate 186 is positioned to the left of the inner thrust plate 180, defining therewith an annular passage 190, and is secured around its periphery to the fan housing section 140a by an annular array of bolts 192. Operatively positioned between the turbine wheel neck portion 188 and the outer thrust 186 is an annular knife-edged labyrinth seal 194. The annular thrust·bearing runner plate 126 extends in a radial direction partially into the annular passage 190. The plate 126 is slightly thinner than the thickness of the passage 190, thereby defining, with the stationary plates 180 and 186, an annular, outer, clearance space 196 between plates 186 and 126, and an annular, inner, clearance space 198 between the plates 126 and 180. As shown in Figure 7, operatively positioned in each of the clearance spaces 196, 198 is an annular array of overlapping foil elements 199 which function, during operation of the gas foil thrust bearing 174, in the manner as described in the U.S. Patent 3,615,121, previously referred to.

The gas foil journal bearing 176 comprises a stationary cylindrical bushing 200 which coaxially circumscribes, but is slightly spaced from, a left end portion of the outer shaft section 118 and is press-fitted into a cylindrical bore 202, formed in the left-hand fan housing section 140a. Interposed between the housing section 140a and the shaft section 118, immediately to the right of the bushing 200, is an annular knife-edged labyrinth seal 204. The inner diameter of the bushing 200 is slightly larger than the portion of shaft section 118 which it circumscribes, and defines therewith an annular clearance space 206 which communicates at its left end with a radially inner annular portion of the clearance space 198 of the thrust bearing. Operatively positioned within the clearance space 206 is an annular array of overlapping foil elements which function during rotation of the shaft means 60 as described in U.S. Patent 3,625,121.

The gas foil journal bearing 178, at the right-hand end of the shaft system, is similar in construction and operation to the bearing 176 and comprises a bushing 208 press-fitted into a bore 210 in the fan housing section 140b, circumscribing a right end portion of the outer shaft section 120 and defining therewith an annular clearance space 212 in which is operatively positioned an annular array of foil elements (not shown), but of the same type shown in Figure 6. Interposed between fan housing section 140b and shaft section 120 immediately to the left of bushing 208 is an annular knife-edge labyrinth seal 214.

The gas foil bearing system (i.e., bearings 174, 176 and 178) is lubricated, and provided with the necessary hydrodynamic supporting force, by the use of bleed air 76 in the following manner. A small portion of the pressurized bleed air 76 entering the turbine housing inlet passage 100 is forced, via a small transfer tube 216, into an annular passage 218 which is defined between the turbine housing and fan housing sections 98b, 104a respectively and circumscribes the flange lip 182. The balance of the bleed air entering the inlet passage 100 is forced radially inwardly through turbine nozzle openings 219 and through the bladed portion of the turbine wheel 102, becoming the cooling air 88 upon its exit from the turbine wheel. From the annular passage 218, bleed air is forced, via an annular series of bores 220 formed through the abutting flange lips 182, 184, into a radially outer portion of the annular passage 190. Bleed air entering the passage 190 is forced through the thrust bearing clearance spaces 196, 198 and then through the journal bearing clearance space 206, across the labyrinth seal 204, and into the interior of the fan housing section 140a.

Another portion of the bleed air entering the passage 218 is forced, via a bore 222 in the fan housing section 140a, into one end of a transfer conduit 224 which communicates at its opposite end with a small transfer passage 226. This transfer passage 226 communicates with the journal bearing clearance space 212. Bleed air entering the transfer passage 228 is sequentially forced into the annular passage 228, through the clearance space 212, across the labyrinth seal 214 and into the interior of the fan housing section 140b. All of the lubricating bleed air entering the fan housing is forced outwardly through its outlet 144 by the rotation of the fan 56.

It can be seen that the present invention's utilization of engine compressor bleed air to drive both the air cycle machine and continuously lubricate its bearing system eliminates the conventional necessity of using a separate, oil-based lubrication system which must be isolated or otherwise protected from the heated ram air 96 traversing the fan housing Additionally, the gas foil bearings 174, 176, 178 themselves are unaffected by their proximity to this high temperature air and permit substantially higher rotational speeds than do conventional oil-lubricated bearings.

In summary, in accordance with the foregoing description, a substantially improved air cycle cooling machine system is provided in which the machine's fan is positioned between the turbine and compressor and between the two series-mounted heat exchangers. By providing two parallel bleed air flow paths within the cooling machine — one across the turbine wheel and the other through the bearing system and into the fan housing — a particularly advantageous dual use of such bleed air is achieved. Because of these features, both the cooling machine and the system which incorporates it are rendered more reliable, compact, rugged and efficient.

**Claims**

1. Apparatus for providing cool environmental air for supply to a conditioned space, such as an aircraft cabin (94), comprising a compressor (58) and a turbine (54) mounted on a shaft (60) and constituting an air cycle machine, first (70) and second (74) heat exchangers, each having first and second thermally communicating air flow paths extending therethrough, an ambient-air duct system for directing ambient air through the first flow paths of the two heat exchangers, and an environmental-air duct system for directing pressurised air from a source thereof, e.g. bleed air from an aircraft engine compressor, sequentially through the second flow path of the second heat exchanger (74), the compressor (58), the second flow path of the first heat exchanger (70), and the turbine (54), thereby to drive the turbine and simultaneously to operate the compressor (58), and to produce cool environmental air from an outlet of the turbine (54); characterised in that the turbine (84) and compressor (58) have rotors mounted on either side of a fan (56) on a common shaft (60) for driving ambient air in turn through the first flow path of the first heat exchanger, the fan, and the first flow path of the second heat exchanger; and characterised in that the two heat exchangers (70, 74) are positioned side-by-side, but spaced apart, and the air cycle machine (52) is positioned in the space between the two heat exchangers in a compact assembly (Figure 3).

2. Apparatus as claimed in Claim 1, in which the air cycle does not project outwardly of the heat exchangers (70, 74).

3. Apparatus as claimed in Claim 1 or Claim 2 in which the fan, compressor and turbine are respectively provided with a fan housing, a compressor housing and a turbine housing, there being abutment planes between the fan housing and each of the compressor and turbine housings, at which planes the housings are clamped together.

4. Apparatus as claimed in Claim 3 in which the compressor housing and/or the turbine housing can be clamped with respect to the fan housing in any one of a number of relative rotational orientations with respect to the shaft axis.

5. Apparatus as claimed in any preceding claim, in which a turbine housing (98) abuts one side of a fan housing (14), and a compressor housing (104) abuts the other side of the fan housing, and the connections between the housings are such that the turbine housing and the compressor housing can each be located with respect to the fan housing in any one of a number of relative rotational orientations with respect to the axis of the shaft.

6. Apparatus as claimed in Claim 5, in which the compressor housing has an outlet on a radially outer portion thereof, the fan housing has an inlet on one radially outer portion thereof and an outlet on another radially outer portion thereof, and the turbine housing has, on a radially outer portion thereof, an inlet for receiving a pressurised gas.

7. Apparatus as claimed in Claim 5 or Claim 6, in which the fan housing is divided into separate, axially adjacent, first and second sections, each circumscribing at least a part of the fan impeller with said inlet being positioned on the first section and said outlet being positioned on the second section, the first and second fan housing sections being connected in one of a number of relative rotational orientations with respect to the shaft axis.

8. Apparatus as claimed in any one of Claims 1 to 8 in which the shaft is at least partially mounted by one or more air lubricated bearings, in which air is supplied to the or each air lubricated bearing from a duct extending from the interior of the turbine.

9. A method of providing cool environmental air to an aircraft cabin (94) using apparatus as claimed in any of the preceding claims, in which bleed air from the aircraft engine compressor is supplied to the environmental air duct system.

**Patentansprüche**

1. Einrichtung zur Erzeugung von kühler Außenluft, die in einen klimatisierten Raum, z.B. eine Flugzeugkabine (94) eingespeist wird, mit einem Kompressor (58) und einer Turbine (54), die auf einer Welle (60) befestigt sind und eine Luftumwälzmaschine darstellen, ersten (70) und zweiten (74) Wärmetauschern, deren jeder erste und zweite, thermisch miteinander in Verbindung stehende und durch die Wärmetauscher führende Luftdurchflußpfade aufweist, ein Raumluft-Leitungssystem, um Raumluft durch die ersten Durchflußpfade der beiden Wärmetauscher zu führen, und ein Umgebungsluft-Leitungssystem, um Druckluft aus einer Quelle, z.B. Anzapfluft aus einem Flugzeugmotorkompressor, nacheinander durch den zweiten Durchflußpfad des zweiten Wärmetauschers (74), den Kompressor (58), den zweiten Durchflußpfad des ersten Wärmetauschers (70), und die Turbine (54) zu richten, wodurch die Turbine angetrieben und gleichzeitig der Kompressor (58) betrieben wird und kühle Umgebungsluft aus einem Auslaß der Turbine (54) erzeugt wird, dadurch gekennzeichnet, daß die Turbine (84) und der Kompressor (58) Rotoren aufweisen, die auf jeder Seite eines Gebläses (56) auf einer gemeinsamen Welle (60) befestigt sind, um Raumluft nacheinander durch den ersten Durchflußpfad des ersten Wärmetauschers, das Gebläse, und den ersten Durchflußpfad des zweiten Wärmetauschers zu führen, und daß die beiden Wärmetauscher (70, 74) seitlich nebeneinander und im Abstand voneinander angeordnet sind, und die Luftumwälzmaschine (52) in dem Raum zwischen den beiden Wärmetauschern in einer kompakten Anordnung positioniert ist (Figur 3).

2. Einrichtung nach Anspruch 1, in der die Luftumwälzmaschine nicht von den Wärmetauschern (70, 74) nach außen vorsteht.

3. Einrichtung nach Anspruch 1 oder 2, in der das Gebläse, der Kompressor und die Turbine jeweils mit einem Gebläsegehäuse, einem Kompressorgehäuse und einem Turbinengehäuse versehen sind, wobei Stoßflächen zwischen dem Gebläsegehäuse und dem Kompressor- sowie Turbinengehäuse vorgesehen sind, an denen die Gehäuse miteinander befestigt sind.

4. Einrichtung nach Anspruch 3, bei der das Kompressorgehäuse und/oder das Turbinengehäuse in bezug auf das Gebläsegehäuse in einer beliebigen aus einer Anzahl von relativen Drehorientierungen in bezug auf die Wellenachse befestigbar sind.

5. Einrichtung nach einem der vorausgehenden Ansprüche, bei der ein Turbinengehäuse (98) an einer Seite eines Gebläsegehäuses (14) und ein Kompressorgehäuse (104) an der anderen Seite des Gebläsegehäuses anliegt, und die Verbindungen zwischen den Gehäusen so ausgelegt sind, daß das Turbinengehäuse und das Kompressorgehäuse jeweils in bezug auf das Gebläsegehäuse in einer beliebigen aus einer Anzahl von relativen Drehorientierungen in bezug auf die Wellenachse angeordnet sind.

6. Einrichtung nach Anspruch 5, bei dem das Kompressorgehäuse einen Auslaß auf einem radial äußeren Teil dieses Gehäuses besitzt, das Gebläsegehäuse einen Einlaß auf einem radial äußeren Teil dieses Gehäuses und ein Auslaß auf einem anderen radial äußeren Teil dieses Gehäuses besitzt, und das Turbinengehäuse einen Einlaß zur Aufnahme eines Druckgases auf einem radial äußeren Teil des Gehäuses aufweist.

7. Einrichtung nach Anspruch 5 oder 6, bei der das Gebläsegehäuse in getrennte, axial angrenzende, erste und zweite Abschnitte unterteilt ist, deren jeder sich mindestens über einen Teil des Gebläselaufrades erstreckt, wobei der Einlaß auf dem ersten Abschnitt und der Auslaß auf dem zweiten Abschnitt positioniert ist, und wobei die ersten und zweiten Gebläsegehäuseabschnitte in einer aus einer Anzahl von relativen Drehorientierungen in bezug auf die Wellenachse miteinander verbunden sind.

8. Einrichtung nach einem der Ansprüche 1—7, in der die Welle mindestens teilweise durch ein oder mehrere luftgeschmierte Lager festgelegt ist, wobei Luft dem oder jedem luftgeschmierten Lager aus einer aus dem Inneren der Turbine herausführenden Leitung zugeführt wird.

9. Verfahren zum Erzeugen von kühler Umgebungsluft an eine Flugzeugkabine (94) unter Verwendung einer Einrichtung nach einem der vorausgehenden Ansprüche, bei dem Anzapfluft aus dem Flugzeugmotorkompressor dem Umgebungsluft-Leitungssystem zugeführt wird.

**Revendications**

1. Appareil de production d'air ambiant froid pour l'envoi à un espace climatisé, tel qu'une cabine d'avion (94), comprenant un compresseur (58) et une turbine (54) montés sur un arbre (60) et constituant une machine à cycle d'air, un premier (70) et un deuxième (74) échangeurs de chaleur, ayant chacun un premier et un deuxième chemins d'écoulement d'air en communication thermique qui traversent lesdits échangeurs, un système de conduits d'air ambiant pour diriger de l'air ambiant à travers les premiers chemins d'écoulement des deux échangeurs de chaleur, et un système de conduits d'air de climatisation pour diriger de l'air sous pression à partir d'une source, par exemple de l'air de soutirage venant d'un compresseur de moteur de l'avion, successivement à travers le deuxième chemin d'écoulement du deuxième échangeur de chaleur (74), le compresseur (58), le deuxième chemin d'écoulement du premier échangeur de chaleur (70), et la turbine (54), de manière à entraîner la turbine et à actionner simultanément le compresseur (58), et à produire de l'air de climatisation froid à une sortie de la turbine (54); caractérisé en ce que la turbine (84) et le compresseur (58) ont des rotors montés de part et d'autre d'un ventilateur (56) sur un arbre commun (60) pour entraîner l'air ambiant successivement à travers le premier chemin d'écoulement du premier échangeur de chaleur, le ventilateur et le premier chemin d'écoulement du deuxième échangeur de chaleur; et caractérisé en ce que les deux échangeurs de chaleur (70, 74) sont placés côte à côte, mais mutuellement espacés, et la machine à cycle d'air (52) est placée dans l'espace compris entre les deux échangeurs de chaleur, en un ensemble compact (figure 3).

2. Appareil suivant la revendication 1, dans lequel la machine à cycle d'air ne fait pas saillie à l'extérieur des échangeurs de chaleur (70, 74).

3. Appareil suivant la revendication 1 ou la revendication 2, dans lequel le ventilateur, le compresseur et la turbine comportent respectivement un carter de ventilateur, un carter de compresseur et un carter de turbine, des plans de butée étant définis entre le carter de ventilateur et chacun des carters de compresseur et de turbine, les carters étant bloqués ensemble à l'endroit de ces plans.

4. Appareil suivant la revendication 3, dans lequel le carter de compresseur et/ou le carter de turbine peuvent être bloqués, par rapport au carter de ventilateur, dans l'une quelconque d'une pluralité d'orientations angulaires relatives par rapport à l'axe de l'arbre.

5. Appareil suivant l'une quelconque des revendications précédentes, dans lequel un carter de turbine (98) est en butée contre un côté d'un carter de ventilateur (14), et un carter de compresseur (104) est en butée contre l'autre côté du carter de ventilateur, et les raccordements entre les carters sont tels que le carter de turbine et le carter de compresseur peuvent chacun être placés, par rapport au carter de ventilateur, dans l'une quelconque d'une pluralité d'orientations angulaires relatives par rapport à l'axe de l'arbre.

6. Appareil suivant la revendication 5, dans lequel le carter de compresseur comporte une sortie sur une partie radialement extérieure, le carter de ventilateur comporte une entrée sur une partie radialement extérieure et une sortie sur une autre partie radialement extérieure, et le carter de turbine comporte, sur une partie radialement extérieure, une entrée pour recevoir un gaz sous pression.

7. Appareil suivant la revendication 5 ou la revendication 6, dans lequel le carter de ventilateur est divisé en une première et une deuxième parties séparées, axialement adjacentes, entourant chacune au moins une partie de la roue de ventilateur, ladite entrée étant située sur la première partie et ladite sortie étant située sur la deuxième partie, les première et deuxième parties du carter de ventilateur étant assemblées selon une orientation choisie parmi une pluralité d'orientations angulaires relatives par rapport à l'axe de l'arbre.

8. Appareil suivant l'une quelconque des revendications 1 à 7, dans lequel l'arbre est au moins partiellement supporté par un ou plusieurs paliers lubrifiés à l'air, dans lequel l'air est fourni au palier ou à chaque palier lubrifié à l'air par un conduit s'étendant à partir de l'intérieur de la turbine.

9. Procédé de fourniture d'air de climatisation froid à une cabine d'avion (94) au moyen de l'appareil suivant l'une quelconque des revendications précédentes, dans lequel de l'air de soutirage venant du compresseur du moteur de l'avion est fourni au système de conduit d'air de climatisation.

FIG.1.
(PRIOR ART)

FIG.2.

FIG.3.

FIG. 4.

F1G.5.

FIG. 6.

FIG. 7.

4